# EUROPEAN PATENT SPECIFICATION

(11) **EP 3 342 630 B1**
(45) Date of publication and mention of the grant of the patent: **02.03.2022**
(21) Application number: 17208503.7
(22) Date of filing: 19.12.2017
(51) Int. Cl.: B60L 53/18, B25J 9/00, B67D 9/02

(54) **A CHARGING CONNECTION DEVICE, A CHARGING ARRANGEMENT AND A METHOD FOR CONNECTING A CHARGING CONNECTION DEVICE TO AN ELECTRIC VESSEL**
LADEANSCHLUSSVORRICHTUNG, LADEANORDNUNG UND VERFAHREN ZUR VERBINDUNG EINER LADEANSCHLUSSVORRICHTUNG MIT EINEM ELEKTRISCHEN BOOT
DISPOSITIF DE CONNEXION DE CHARGEMENT, AGENCEMENT DE CHARGEMENT ET PROCÉDÉ PERMETTANT DE CONNECTER UN DISPOSITIF DE CONNEXION DE CHARGEMENT À UN RÉCIPIENT ÉLECTRIQUE

(30) Priority: 27.12.2016 EP 16206948
(43) Date of publication of application: 04.07.2018
(73) Proprietor: 3MAR Oy, 20240 Turku (FI)
(72) Inventor: Immonen, Aarno, 21250 Masku (FI); Immonen, Pauli, 21250 Masku (FI)
(74) Representative: Berggren Oy

(56) References cited:
- EP-A1- 2 375 104
- WO-A1-00/40378
- WO-A1-2015/126320
- US-A1- 2011 281 452
- US-A1- 2015 210 174

## Description

### TECHNICAL FIELD OF THE INVENTION

The present invention relates to a charging connection device and a method for connecting a charging connection device to an electric vessel according to the preambles of the appended independent claims. The invention also relates to a charging arrangement incorporating a charging connection device.

### BACKGROUND OF THE INVENTION

Strict environmental regulations force shipping companies to move from conventional diesel vessels to plug-in hybrid and all-electric vessels. These vessels have a battery system that provides electric power to an electric propulsion motor of the vessel.

A battery system of a plug-in hybrid or all-electric vessel can be charged with an onshore charging device. One known charging device is intended to be located on a mooring dock. The charging device allows a battery system of a vessel to be charged while the vessel is docked. Electric power is supplied to the battery system of the vessel through an electrical connector of the charging device that is arranged to be coupled to and decoupled from a counterpart electrical connector mounted on a side of the vessel manually by operating personnel.

A problem associated with the known charging device is that coupling and decoupling of the electrical connector is difficult and time-consuming. Another problem associated with the known charging device is that its use is difficult or even impossible in harsh weather conditions, which are typically characterised by high waves and changes in water level. Still another problem associated with the known charging device is that its use can be dangerous to the operating personnel.

Document WO 2015/126320 discloses a device and method for establishing a temporary connection between two movable objects.

### OBJECTIVES OF THE INVENTION

It is the main objective of the present invention to reduce or even eliminate the prior art problems presented above.

It is an objective of the present invention to provide a charging connection device that is connectable to an electric vessel for supplying electric power to a battery system of the electric vessel. In more detail, it is an objective of the invention to provide a charging connection device that can be coupled to and decoupled from a bow or stern of an electric vessel in a fast and reliable manner. It is a further objective of the present invention to provide a charging connection device enabling to supply electric power to a battery system of an electric vessel in harsh weather conditions.

It is also an objective of the invention to provide a charging arrangement for charging a battery system of an electric vessel having a ramp. It is a further objective of the invention to provide a charging arrangement enabling to charge a battery system of an electric vessel in harsh weather conditions.

It is also an objective of the invention to provide a fast and reliable method for connecting a charging connection device to an electric vessel. It is a further objective of the present invention to provide a method enabling to connect a charging connection device to an electric vessel in harsh weather conditions.

In order to realise the above-mentioned objectives, the charging connection device and the method according to the invention are characterised by what is presented in the characterising parts of the appended independent claims. Advantageous embodiments of the invention are described in the dependent claims.

### DESCRIPTION OF THE INVENTION

A typical charging connection device according to the invention comprises an electrical connector for electrically connecting the charging connection device to an electric vessel, a first arm having a first end and a second end, the electrical connector being pivotally attached to the first end of the first arm and the length of the first arm being adjustable so that the electrical connector can be moved in the longitudinal direction of the first arm, a second arm having a first end and a second end, the first end of the second arm being pivotally attached to the second end of the first arm and the second end of the second arm being attachable to a ramp, means for pivoting the first arm relative to the second arm, means for pivoting the electrical connector relative to the first arm, and means for determining the position of a counterpart electrical connector mounted on the electric vessel, wherein the length of the first arm is configured to be adjustable based on the determined position of the counterpart electrical connector, and the means for pivoting the electrical connector relative to the first arm is configured to pivot the electrical connector relative to the first arm based on the determined position of the counterpart electrical connector.

The charging connection device according to the invention is used for electrically connecting an electric power source such as a charging device to an electric vessel. The charging connection device enables to supply electric power from the electric power source to the electric vessel so that a battery system of the electric vessel can be charged. By an electric vessel is meant a vessel, such as a ship, ferry, boat or the like that comprises a battery system for providing electric power to an electric propulsion motor of the vessel. The electric vessel can be an all-electric vessel or a plug-in hybrid vessel. On the all-electric vessel, all the power, for both propulsion and auxiliaries, comes from a battery system. A plug-in hybrid vessel has also a conventional diesel engine for producing electric power to the electric propulsion motor. A battery system of an electric vessel can be charged by coupling the electrical connector of the charging connection device to a counterpart electrical connector on the electric vessel and then supplying electric power to the battery system.

The charging connection device according to the invention comprises two arms, i.e. the first arm and the second arm, which are pivotally attached at their ends to each other. The relative position between the two arms, i.e. the angle between the first and second arms, can be changed by using the means for pivoting the first arm relative to the second arm. The means for pivoting the first arm relative to the second arm is attached to the first and second arms. By pivoting the first arm relative to the second arm, the electrical connector that is attached to the first end of the first arm can be moved to a desired height so that by adjusting the length of the first arm and by pivoting the electrical connector relative to the first arm the electrical connector can be coupled to a counterpart electrical connector mounted on the electric vessel. The counterpart electrical connector is preferably located on a bow or stern of the electric vessel. The electric vessel may alternatively have a counterpart electrical connector both on its bow and stern so that the battery system of the electric vessel can be charged, irrespective of whether the electric vessel is docked at its bow or stern.

The length of the first arm is adjustable so that the electrical connector can be moved in the longitudinal direction of the first arm. The adjustable length of the first arm increases the reach of the charging connection device. The adjustability of the first arm enables the coupling of the electrical connector to counterpart electrical connectors, which are located at different distances from the charging connection device. The first arm is a telescopic arm that can be adjusted, for example, by using a pneumatic cylinder, a hydraulic cylinder or an electric cylinder. The first arm may comprise an outer arm and an inner arm that is located inside the outer arm. The inner arm is arranged to be moveable relative to the outer arm so that the length of the first arm can be changed.

The electrical connector is pivotally attached to the first end of the first arm. The electrical connector can be pivoted by using the means for pivoting the electrical connector relative to the first arm. The pivotal attachment of the electrical connector to the first arm facilitates the coupling of the electrical connector to the counterpart electrical connector, because it enables to easily arrange the mounting face of the electrical connector to a correct position with respect to the mounting face of the counterpart electrical connector.

The charging connection device according to the invention comprises means for determining the position of a counterpart electrical connector mounted on the electric vessel. The means for determining the position of a counterpart electrical connector are preferably located on the electrical connector. In the charging connection device according to the invention the length of the first arm is configured to be adjustable based on the determined position of the counterpart electrical connector, and the means for pivoting the electrical connector relative to the first arm is configured to pivot the electrical connector relative to the first arm based on the determined position of the counterpart electrical connector. When the position of the counterpart electrical connector has been determined, the length of the first arm and the orientation of the electrical connector can be changed so that the electrical connector of the charging connection device may be coupled to the counterpart electrical connector. The means for pivoting the electrical connector relative to the first arm can also be configured to pivot the electrical connector relative to the first arm based on the angle between the longitudinal axis of the first arm and the horizontal plane.

When the electrical connector is coupled to the counterpart electrical connector of the electric vessel, the first arm can be kept immobile relative to the second arm. This can be done with the pivoting means, which during the coupling time can be configured to prevent the pivoting of the first arm with respect to the second arm. Alternatively, the pivoting means may be configured to actively move the first arm relative to the second arm so that the movement of the electric vessel due to waves and water level changes cannot easily damage the charging connection device. The means for pivoting the first arm relative to the second arm may also be set into a freely moving state, thus allowing the first arm to pivot freely relative to the second arm.

The charging connection device may be connected to an electric power source such as a charging device. The electric power source can supply DC (direct current) power or AC (alternating current) power through the charging connection device to a battery system of an electric vessel. The electric power source is electrically coupled to the electrical connector of the charging connection device by means of cables or wires.

The charging connection device may comprise one or more electrical connectors.

The electrical connector may comprise prongs for inserting into receptacles in the counterpart electrical connector. Alternatively, the electrical connector may comprise receptacles for receiving prongs of the counterpart electrical connector. Instead of using a galvanic connection between the electrical connector and the counterpart electrical connector, electric power may also be transferred by using an inductive coupling, preferably a resonant inductive coupling between the connectors. Resonant inductive coupling is the near field wireless transmission of electrical energy between two magnetically coupled coils that are part of resonant circuits tuned to resonate at the same frequency. A transmitter coil in the electrical connector can be used to transmit electric power across an intervening space to a receiver coil in the counterpart electrical connector.

The charging connection device according to the invention is attached on a ramp, whereby a battery system of an electric vessel may be charged through the charging connection device while the electric vessel is docked to the ramp. The electric vessel can be arranged to be docked to the ramp at its bow or stern. The charging connection device is preferably attached close to the docking end of the ramp. The ramp is pivotally mounted to the shore so that the docking end of the ramp can move up and down as a result of water interaction.

An advantage of the charging connection device according to the invention is that it can be connected to an electric vessel in an easy, fast and reliable manner. Another advantage of the charging connection device according to the invention is that since the position and orientation of the electrical connector can be adjusted, the charging connection device may be easily connected to various electric vessels having counterpart electrical connectors at different heights and distances. Still another advantage of the charging connection device according to the invention is that it enables to charge an electric vessel in difficult weather conditions because the charging connection device allows compensating the movement of the electric vessel due to waves and water level changes.

According to an embodiment of the invention the means for pivoting the first arm relative to the second arm comprises one or more of the following: a pneumatic cylinder, a hydraulic cylinder or an electric cylinder attached between the first arm and the second arm. The number and type of the cylinders can vary depending on the application. Preferably, the means for pivoting the first arm relative to the second arm comprises one or two cylinders attached between the first arm and the second arm.

According to an embodiment of the invention the means for pivoting the electrical connector relative to the first arm comprises one or more of the following: a pneumatic cylinder, a hydraulic cylinder or an electric cylinder attached between the electrical connector and the first arm. The number and type of the cylinders can vary depending on the application. Preferably, the means for pivoting the electrical connector relative to the first arm comprises at least two cylinders attached between the electrical connector and the first arm.

According to an embodiment of the invention the charging connection device comprises means for pivoting the second arm relative to the ramp. This arrangement enables to compensate the tilting of the ramp due to waves and water level changes.

According to an embodiment of the invention the means for pivoting the second arm relative to the ramp comprises one or more of the following: a pneumatic cylinder, a hydraulic cylinder or an electric cylinder attached between the second arm and the ramp. The number and type of the cylinders can vary depending on the application. Preferably, the means for pivoting the second arm relative to the ramp comprises one or two cylinders attached between the second arm and the ramp.

According to an embodiment of the invention the charging connection device comprises means for measuring the angle between the longitudinal axis of the first arm and the horizontal plane, and that the means for pivoting the first arm relative to the second arm is configured to pivot the first arm relative to the second arm and/or the means for pivoting the second arm relative to the ramp is configured to pivot the second arm relative to the ramp based on the measured angle. The means for pivoting the first arm relative to the second arm can be configured to pivot the first arm relative to the second arm and/or the means for pivoting the second arm relative to the ramp can be configured to pivot the second arm relative to the ramp in such a manner that the angle between the longitudinal axis of the first arm and the horizontal plane stays essentially at a desired value. The advantage of this is that it enables to keep the first arm in an optimal position for coupling the electrical connector of the charging connection device to a counterpart electrical connector of an electric vessel. If the charging connection device is attached to a ramp that is pivotally mounted to the shore this arrangement enables to compensate the tilting of the ramp due to waves and water level changes.

According to an embodiment of the invention the means for measuring the angle between the longitudinal axis of the first arm and the horizontal plane comprises an inclinometer attached to the first arm. By an inclinometer is meant an instrument for measuring angles of tilt with respect to gravity. An inclinometer generates an artificial horizontal plane and measures angular tilt with respect to this horizontal plane. An inclinometer is also known, for example, as a tilt meter, tilt indicator, slope gauge, gradient meter, level gauge and level meter.

A suitable inclinometer to be used in the charging connection device can be, for example, a two-axis MEMS (Micro Electro Mechanical Systems) inclinometer, which enables simultaneous two-dimensional tilt angles measurement. A two-axis MEMS inclinometer can be digitally compensated and precisely calibrated for nonlinearity for operating temperature variation resulting in higher angular accuracy over wider angular measurement range. Preferably, the inclinometer provides an electronic interface based, for example, on CAN (Controller Area Network).

According to an embodiment of the invention the means for determining the position of a counterpart electrical connector mounted on the electric vessel comprises an imaging device attached to the electrical connector. Preferably, the imaging device is located on the mounting face of the electrical connector. The imaging device can be, for example, a digital camera.

According to an embodiment of the invention the charging connection device comprises locking members attached to sides of the electrical connector for locking the electrical connector to the counterpart electrical connector mounted on the electric vessel. The locking members ensure that the electrical connector stays in contact with the counterpart electrical connector when a battery system is charged. The locking members may be provided with a safety feature that releases the electrical connector from the counterpart electrical connector in a situation where the force affecting the locking members exceeds a predetermined value.

According to an embodiment of the invention the charging connection device comprises means for detecting if the electrical connector is connected to the counterpart electrical connector mounted on the electric vessel. The information obtained from the detecting means can be used in deciding when electric power can be supplied to the battery system of the electric vessel.

The present invention relates to a charging arrangement. A typical charging arrangement according to the invention comprises a charging device for charging an electric vessel, a ramp having a first end and a second end, the first end of the ramp being pivotally mounted to the shore, and a charging connection device according to the invention, the charging connection device being attached to the ramp and electrically connected to the charging device. The charging connection device is attached at the second end of the second arm to the ramp. Preferably, the charging connection device is located near a second end of the ramp, i.e. near the end to which an electric vessel is intended to be docked. The pivotal attachment of the ramp allows the second end of the ramp to move up and down as a result of water interaction. The electric vessel can be arranged to be docked to the ramp at its bow or stern. The ramp may comprise at its second end means for mooring the electric vessel from its bow and/or stern to the ramp. The charging device is configured to supply electric power through the charging connection device to a battery system of an electric vessel. The charging device is electrically coupled to the electrical connector of the charging connection device by means of cables or wires.

An advantage of the charging arrangement according to the invention is that it enables to charge a battery system of an electric vessel in an easy, fast and reliable manner. The battery system of the electric vessel can be charged while the vessel is docked. Another advantage of the charging arrangement according to the invention is that since the height position and orientation of the electrical connector of the charging connection device can easily be adjusted, the charging device may be easily connected to various electric vessels having counterpart electrical connectors at different heights and distances. Still another advantage of the charging arrangement according to the invention is that it enables to charge an electric vessel in difficult weather conditions because the ramp that is pivotally mounted to the shore and the charging connection device allow compensating the movement of the electric vessel due to waves and water level changes.

The second end of the second arm of the charging connection device is pivotally attached to the ramp. The charging connection device comprises means for pivoting the second arm relative to the ramp, which pivoting means is configured to pivot the second arm relative to the ramp arm based on the angle between the longitudinal axis of the first arm and the horizontal plane. The means for pivoting the second arm relative to the ramp can be configured to pivot the second arm relative to the ramp in such a manner that the angle between the longitudinal axis of the first arm and the horizontal plane stays essentially at a desired value. The advantage of this is that it enables to keep the first arm in an optimal position for coupling the electrical connector of the charging connection device to a counterpart electrical connector of an electric vessel. This arrangement enables to compensate the tilting of the ramp due to waves and water level changes.

The charging arrangement comprises an electric vessel having an electric propulsion motor, a battery system for providing electric power to the electric propulsion motor and a counterpart electrical connector for electrically connecting with the electrical connector of the charging connection device. The counterpart electrical connector is preferably located on a bow or stern of the electric vessel. The electric vessel may alternatively have a counterpart electrical connector both on its bow and stern so that the battery system of the electric vessel can be charged, irrespective of whether the electric vessel is docked at its bow or stern. The electric vessel preferably comprises a ramp that can be lowered on the ramp to allow access for people and vehicles.

The counterpart electrical connector comprises guiding plates for guiding the electrical connector of the charging connection device in place. The guiding plates are attached to sides of the counterpart electrical connector. Preferably, the guiding plates are tilted outwards from the mounting face of the counterpart electrical connector in order to facilitate the coupling of the electrical connector to the counterpart electrical connector. The guiding plates are attached to the sides of the counterpart electrical connector in such a manner that they form a shape of a frustum of a pyramid.

The exemplary embodiments of the invention presented in this text are not interpreted to pose limitations to the applicability of the appended claims. The verb "to comprise" is used in this text as an open limitation that does not exclude the existence of also unrecited features.

### BRIEF DESCRIPTION OF THE DRAWINGS

- Fig. 1: illustrates a charging connection device according to an embodiment of the invention, and
- fig. 2: illustrates a charging arrangement according to an embodiment of the invention.

### DETAILED DESCRIPTION OF THE DRAWINGS

The same reference signs are used of the same or like components in different embodiments.

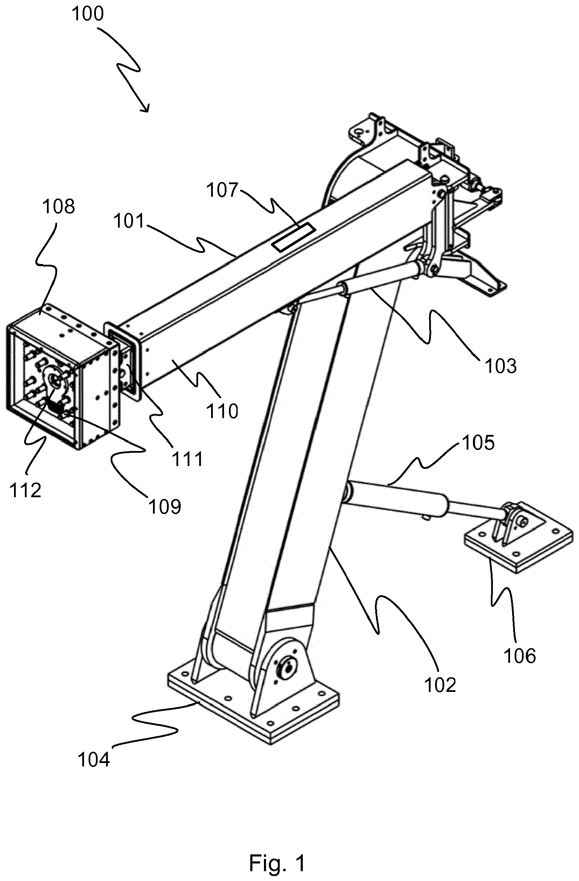

Fig. 1 illustrates a charging connection device according to an embodiment of the invention. The charging connection device 100 comprises two arms 101 and 102, which are pivotally attached at their ends to each other. The relative position between the arms 101 and 102 can be changed by using a cylinder 103 that is attached to the arms 101 and 102.

The arm 102 is intended to be pivotally attached to a ramp (not shown in fig. 1) with a mounting flange 104. The relative position of the arm 102 with respect to the ramp can be changed by using a cylinder 105. One end of the cylinder 105 is attached to the arm 102 and the other end of the cylinder 105 is attachable to the ramp with a mounting flange 106.

The charging connection device 100 comprises an inclinometer 107 that is attached to the arm 101. The inclinometer 107 is used for measuring the angle between the longitudinal axis of the arm 101 and the horizontal plane. The measured angle can be utilised to control the operation of the cylinders 103 and 105. For example, the cylinder 103 can be configured to pivot the arm 101 relative to the arm 102 and/or the cylinder 105 can be configured to pivot the arm 102 relative to the ramp in such a manner that the angle between the longitudinal axis of the arm 101 and the horizontal plane stays essentially at a desired value.

An electrical connector 108 is pivotally attached to an end of the arm 101. The electrical connector 108 is used for electrically connecting the charging connection device 100 to an electric vessel (not shown in fig. 1). The electrical connector 108 comprises prongs 109 for inserting into receptacles in a counterpart electrical connector of the electric vessel.

The arm 101 comprises an outer arm 110 and an inner arm 111 that is located inside the outer arm 110. The inner arm 111 is arranged to be moveable with respect to the outer arm 110 so that the length of the arm 101 can be changed. Because the length of the arm 101 is adjustable, the electrical connector 108 can be coupled to counterpart electrical connectors, which are located at different distances from the charging connection device 100. The charging connection device 100 comprises an imaging device 112 located on the mounting face of the electrical connector 108 for determining the position of a counterpart electrical connector. Using this position information, the arm 101 can be extended to the correct length.

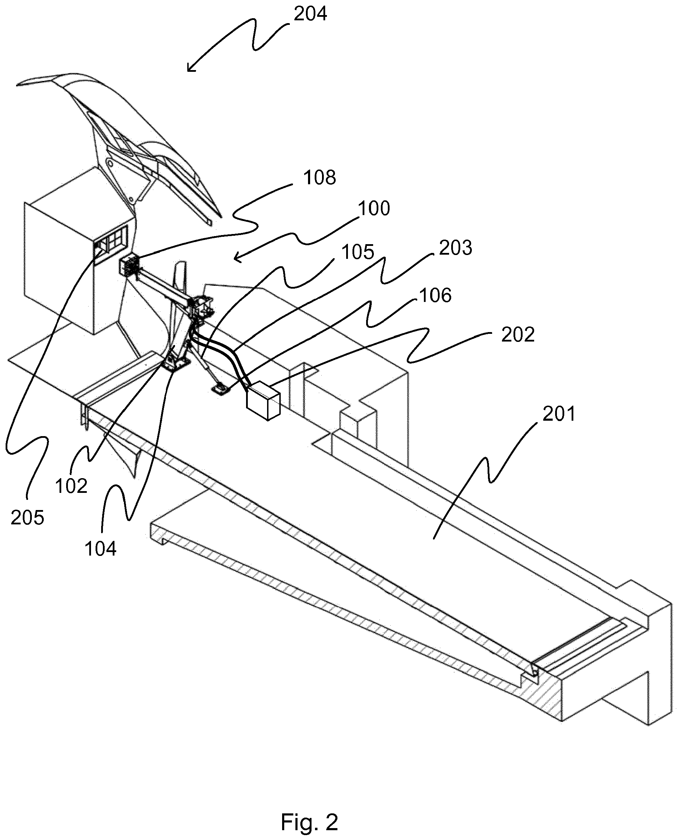

Fig. 2 illustrates a charging arrangement according to an embodiment of the invention. The charging arrangement comprises a ramp 201 that is pivotally mounted to the shore, and a charging device 202 that is electrically connected with cables 203 to the charging connection device 100 of fig. 1. Both the charging device 202 and the charging connection device 100 are attached on the ramp 201, near the end of the ramp 201 to which an electric vessel 204 is docked at its bow.

The charging device 202 is electrically connected with the cables 203 to the electrical connector 108 of the charging connection device 100. The charging device 202 can supply electric power through the electrical connector 108 to the electric vessel 204. The electric vessel 204 comprises on its bow a counterpart electrical connector 205 to which the electrical connector 108 is intended to be coupled and through which electric power is supplied to a battery system (not shown in fig. 2) of the electric vessel 204. The battery system of the electric vessel 204 is charged while the electric vessel 204 is docked to the ramp 201.

The charging connection device 100 is pivotally attached on the ramp 201. The ends of the arm 102 and the cylinder 105 are attached to the ramp 201 with the mounting flanges 104 and 106, respectively. The pivotal attachment of the charging connection device 100 to the ramp 201 enables to arrange and keep the arm 101 in an optimal position for coupling the electrical connector 108 of the charging connection device 100 to the counterpart electrical connector 205 of the electric vessel 204. This arrangement thus enables to compensate the tilting of the ramp 201 due to waves and water level changes.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A charging arrangement, comprising:
- a shore, and
- a charging device (202) for charging an electric vessel (204),
wherein the charging arrangement comprises:
- a ramp (201) having a first end and a second end, the first end of the ramp (201) being pivotally mounted to the shore,
- a charging connection device (100) attached to the ramp (201) and electrically connected to the charging device (202), the charging connection device (100) comprising an electrical connector (108) for electrically connecting the charging connection device (100) to an electric vessel (204), a first arm (101) having a first end and a second end, the electrical connector (108) being pivotally attached to the first end of the first arm (101), a second arm (102) having a first end and a second end, the first end of the second arm (102) being pivotally attached to the second end of the first arm (101) and the second end of the second arm (102) being attached to the ramp (201), means (103) for pivoting the first arm (101) relative to the second arm (102), means for pivoting the electrical connector (108) relative to the first arm (101), and means (112) for determining the position of a counterpart electrical connector (205) mounted on the electric vessel (204), wherein the means for pivoting the electrical connector (108) relative to the first arm (101) is configured to pivot the electrical connector (108) relative to the first arm (101) based on the determined position of the counterpart electrical connector (205), and the length of the first arm (101) is adjustable so that the electrical connector (108) can be moved in the longitudinal direction of the first arm (101), and the length of the first arm (101) is configured to be adjustable based on the determined position of the counterpart electrical connector (205), and
- an electric vessel (204) having an electric propulsion motor, a battery system for providing electric power to the electric propulsion motor and a counterpart electrical connector (205) for electrically connecting with the electrical connector (108) of the charging connection device (100), the counterpart electrical connector (205) comprising guiding plates for guiding the electrical connector (108) of the charging connection device (100) in place, the guiding plates being attached to the sides of the counterpart electrical connector (205) in such a manner that they form a shape of a frustum of a pyramid.

2. The charging arrangement according to claim 1, **characterised in that** the second end of the second arm (102) of the charging connection device (100) is pivotally attached to the ramp (201).

3. The charging arrangement according to claim 1 or 2, **characterised in that** the charging connection device (100) comprises means (105) for pivoting the second arm (102) relative to the ramp (201).

4. The charging arrangement according to any of the preceding claims, **characterised in that** the charging connection device (100) comprises means (107) for measuring the angle between the longitudinal axis of the first arm (101) and the horizontal plane, and that the means (103) for pivoting the first arm (101) relative to the second arm (102) is configured to pivot the first arm (101) relative to the second arm (102) and/or the means (105) for pivoting the second arm (102) relative to the ramp (201) is configured to pivot the second arm (102) relative to the ramp (201) based on the measured angle.

5. The charging arrangement according to claim 4, **characterised in that** the means for measuring the angle between the longitudinal axis of the first arm (101) and the horizontal plane comprises an inclinometer (107) attached to the first arm (101).

6. The charging arrangement according to any of the preceding claims, **characterised in that** the means for determining the position of a counterpart electrical connector (205) mounted on the electric vessel (204) comprises an imaging device (112) attached to the electrical connector (108).

7. The charging arrangement according to any of the preceding claims, **characterised in that** the charging connection device (100) comprises locking members attached to sides of the electrical connector (108) for locking the electrical connector (108) to the counterpart electrical connector (205) mounted on the electric vessel (204).

8. The charging arrangement according to any of the preceding claims, **characterised in that** the charging connection device (100) comprises means for detecting if the electrical connector (108) is connected to the counterpart electrical connector (205) mounted on the electric vessel (204).

## Patentansprüche

1. Ladeanordnung, umfassend:
- ein Ufer und
- eine Ladevorrichtung (202) zum Laden eines elektrischen Seefahrzeugs (204),
wobei die Ladeanordnung Folgendes umfasst:
- eine Rampe (201) mit einem ersten Ende und einem zweiten Ende, wobei das erste Ende der Rampe (201) schwenkbar an dem Ufer montiert ist,
- eine Ladeanschlussvorrichtung (100), die an der Rampe (201) angebracht ist und elektrisch mit der Ladevorrichtung (202) verbunden ist, wobei die Ladeanschlussvorrichtung (100) einen elektrischen Stecker (108) zum elektrischen Verbinden der Ladeanschlussvorrichtung (100) zu einem elektrischen Seefahrzeug (204), einen ersten Arm (101) mit einem ersten Ende und einem zweiten Ende, wobei der elektrische Stecker (108) schwenkbar an dem ersten Ende des ersten Arms (101) befestigt ist, einen zweiten Arm (102) mit einem ersten Ende und einem zweiten Ende, wobei das erste Ende des zweiten Arms (102), der schwenkbar an dem zweiten Ende des ersten Arms (101) befestigt ist und das zweite Ende des zweiten Arms (102) an der Rampe (201) befestigt ist, Mittel (103) zum Verschwenken des ersten Arms (101) relativ zum zweiten Arm (102), Mittel zum Verschwenken des elektrischen Steckers (108) relativ zum ersten Arm (101) und Mittel (112) zum Bestimmen der Position eines elektrischen Gegensteckers (205), der an dem elektrischen Seefahrzeug (204) angebracht ist, umfasst, wobei das Mittel zum Schwenken des elektrischen Steckers (108) relativ zum ersten Arm (101) konfiguriert ist, um den elektrischen Stecker (108) relativ zum ersten Arm (101) basierend auf der bestimmten Position des elektrischen GegenSteckers (205) zu schwenken, und die Länge des ersten Arms (101) einstellbar ist, so dass der elektrische Stecker (108) in Längsrichtung des ersten Arms (101) bewegt werden kann, und die Länge des ersten Arms (101) konfiguriert ist, um basierend auf der bestimmten Position des elektrischen Gegensteckers (205) einstellbar zu sein, und
- ein elektrisches Seefahrzeug (204) mit einem elektrischen Antriebsmotor, einem Batteriesystem zum Bereitstellen von elektrischem Strom für den elektrischen Antriebsmotor und einen elektrischen Gegenstecker (205) zum elektrischen Verbinden mit dem elektrischen Stecker (108) der Ladeanschlussvorrichtung (100), wobei der elektrische Gegenstecker (205) Führungsplatten zum Führen des elektrischen Steckers (108) der Ladeanschlussvorrichtung (100) an Ort und Stelle umfasst, wobei die Führungsplatten an den Seiten des elektrischen Gegensteckers (205) derart angebracht sind, dass sie eine Form eines Pyramidenstumpfes bilden.

2. Ladeanordnung nach Anspruch 1, **dadurch gekennzeichnet, dass** das zweite Ende des zweiten Arms (102) der Ladeanschlussvorrichtung (100) schwenkbar an der Rampe (201) befestigt ist.

3. Ladeanordnung nach Anspruch 1 oder 2, **dadurch gekennzeichnet, dass** die Ladeanschlussvorrichtung (100) Mittel (105) zum Verschwenken des zweiten Arms (102) relativ zur Rampe (201) umfasst.

4. Ladeanordnung nach einem der vorhergehenden Ansprüche, **dadurch gekennzeichnet, dass** die Ladeanschlussvorrichtung (100) Mittel (107) zum Messen des Winkels zwischen der Längsachse des ersten Arms (101) und der horizontalen Ebene umfasst, und dass das Mittel (103) zum Schwenken des ersten Arms (101) relativ zum zweiten Arm (102) dazu konfiguriert ist, den ersten Arm (101) relativ zum zweiten Arm (102) zu schwenken und/oder das Mittel (105) zum Schwenken des zweiten Arms (102) relativ zu der Rampe (201) dazu konfiguriert ist, den zweiten Arm (102) relativ zu der Rampe (201) basierend auf dem gemessenen Winkel zu schwenken.

5. Ladeanordnung nach Anspruch 4, **dadurch gekennzeichnet, dass** das Mittel zum Messen des Winkels zwischen der Längsachse des ersten Arms (101) und der horizontalen Ebene einen Neigungsmesser (107) umfasst, der an dem ersten Arm (101) angebracht ist.

6. Ladeanordnung nach einem der vorhergehenden Ansprüche, **dadurch gekennzeichnet, dass** das Mittel zum Bestimmen der Position eines an dem elektrischen Seefahrzeug (204) angebrachten elektrischen Gegensteckers (205) eine Abbildungsvorrichtung (112) umfasst, die an dem elektrischen Stecker (108) befestigt ist.

7. Ladeanordnung nach einem der vorhergehenden Ansprüche, **dadurch gekennzeichnet, dass** die Ladeanschlussvorrichtung (100) Verriegelungselemente umfasst, die an Seiten des elektrischen Steckers (108) zum Verriegeln des elektrischen Steckers (108) mit dem elektrischen Gegenstecker (205), der an dem elektrischen Seefahrzeug (204) montiert ist, angebracht sind.

8. Ladeanordnung nach einem der vorhergehenden Ansprüche, **dadurch gekennzeichnet, dass** die Ladeanschlussvorrichtung (100) Mittel zum Erkennen umfasst, ob der elektrische Stecker (108) mit dem elektrischen Gegenstecker (205) verbunden ist, der an dem elektrischen Seefahrzeug (204) angebracht ist.

## Revendications

1. Agencement de charge, comprenant :
- une rive, et
- un dispositif de charge (202) pour charger une cuve électrique (204),
dans lequel l'agencement de charge comprend :
- une rampe (201) ayant une première extrémité et une seconde extrémité, la première extrémité de la rampe (201) étant montée de manière pivotante sur la rive,
- un dispositif de connexion de charge (100) fixé à la rampe (201) et connecté électriquement au dispositif de charge (202), le dispositif de connexion de charge (100) comprenant un connecteur électrique (108) pour connecter électriquement le dispositif de connexion de charge (100) à une cuve électrique (204), un premier bras (101) ayant une première extrémité et une seconde extrémité, le connecteur électrique (108) étant fixé de manière pivotante à la première extrémité du premier bras (101), un second bras (102) ayant une première extrémité et une seconde extrémité, la première extrémité du second bras (102) étant fixée de manière pivotante à la seconde extrémité du premier bras (101) et la seconde extrémité du second bras (102) étant fixée à la rampe (201), un moyen (103) pour faire pivoter le premier bras (101) par rapport au second bras (102), un moyen pour faire pivoter le connecteur électrique (108) par rapport au premier bras (101), et un moyen (112) pour déterminer la position d'un connecteur électrique homologue (205) monté sur la cuve électrique (204), dans lequel le moyen pour faire pivoter le connecteur électrique (108) par rapport au premier bras (101) est configuré pour faire pivoter le connecteur électrique (108) par rapport au premier bras (101) sur la base de la position déterminée du connecteur électrique homologue (205), et la longueur du premier bras (101) est réglable de sorte que le connecteur électrique (108) peut être déplacé dans la direction longitudinale du premier bras (101), et la longueur du premier bras (101) est configurée pour être réglable sur la base de la position déterminée du connecteur électrique homologue (205), et
- une cuve électrique (204) ayant un moteur de propulsion électrique, un système de batterie pour fournir de l'énergie électrique au moteur de propulsion électrique et un connecteur électrique homologue (205) pour se connecter électriquement au connecteur électrique (108) du dispositif de connexion de charge (100), le connecteur électrique homologue (205) comprenant des plaques de guidage pour guider le connecteur électrique (108) du dispositif de connexion de charge (100) en place, les plaques de guidage étant fixées sur les côtés du connecteur électrique homologue (205) de telle manière qu'elles forment une forme de tronc de pyramide.

2. Agencement de charge selon la revendication 1, **caractérisé en ce que** la seconde extrémité du second bras (102) du dispositif de connexion de charge (100) est fixée de manière pivotante à la rampe (201).

3. Agencement de charge selon la revendication 1 ou 2, **caractérisé en ce que** le dispositif de connexion de charge (100) comprend un moyen (105) pour faire pivoter le second bras (102) par rapport à la rampe (201).

4. Agencement de charge selon l'une quelconque des revendications précédentes, **caractérisé en ce que** le dispositif de connexion de charge (100) comprend un moyen (107) pour mesurer l'angle entre l'axe longitudinal du premier bras (101) et le plan horizontal, et **en ce que** le moyen (103) pour faire pivoter le premier bras (101) par rapport au second bras (102) est configuré pour faire pivoter le premier bras (101) par rapport au second bras (102), et/ou le moyen (105) pour faire pivoter le second bras (102) par rapport à la rampe (201) est configuré pour faire pivoter le second bras (102) par rapport à la rampe (201), sur la base de l'angle mesuré.

5. Agencement de charge selon la revendication 4, **caractérisé en ce que** le moyen pour mesurer l'angle entre l'axe longitudinal du premier bras (101) et le plan horizontal comprend un inclinomètre (107) fixé au premier bras (101).

6. Agencement de charge selon l'une quelconque des revendications précédentes, **caractérisé en ce que** le moyen pour déterminer la position d'un connecteur électrique homologue (205) monté sur la cuve électrique (204) comprend un dispositif d'imagerie (112) fixé au connecteur électrique (108).

7. Agencement de charge selon l'une quelconque des revendications précédentes, **caractérisé en ce que** le dispositif de connexion de charge (100) comprend des éléments de verrouillage fixés aux côtés du connecteur électrique (108) pour verrouiller le connecteur électrique (108) sur le connecteur électrique homologue (205) monté sur la cuve électrique (204).

8. Agencement de charge selon l'une quelconque des revendications précédentes, **caractérisé en ce que** le dispositif de connexion de charge (100) comprend un moyen pour détecter si le connecteur électrique (108) est connecté au connecteur électrique homologue (205) monté sur la cuve électrique (204).
